# EUROPÄISCHE PATENTSCHRIFT

(11) **EP 0 588 862 B1**
(45) Veröffentlichungstag und Bekanntmachung des Hinweises auf die Patenterteilung: **01.03.1995**
(21) Anmeldenummer: 92911716.6
(22) Anmeldetag: 10.06.1992
(51) Int. Cl.: H02B 15/04

(54) **SCHALT- ODER ANZEIGETAFEL FÜR ELEKTRISCHE ÜBERWACHUNGS- UND STEUERUNGSANLAGEN**
SWITCHING OR DISPLAY PANEL FOR ELECTRICAL MONITORING AND CONTROL INSTALLATIONS
TABLEAU DE DISTRIBUTION OU D'AFFICHAGE POUR SYSTEMES DE SURVEILLANCE ET DE COMMANDE

(30) Priorität: 11.06.1991 AT 1171/91
(43) Veröffentlichungstag der Anmeldung: 30.03.1994
(73) Patentinhaber: BERNECKER, Erwin, A-5122 Ach (AT); RAINER, Josef, A-5131 Franking (AT)
(72) Erfinder: BERNECKER, Erwin, A-5122 Ach (AT); RAINER, Josef, A-5131 Franking (AT)
(74) Vertreter: Hübscher, Heiner, Dipl.-Ing.
(86) Internationale Anmeldenummer: AT9200075
(87) Internationale Veröffentlichungsnummer: WO9222948

(56) Entgegenhaltungen:
- EP-A- 0 040 409
- EP-A- 0 047 193
- EP-A- 0 385 966
- DE-A- 876 858
- DE-A- 1 490 576
- DE-A- 2 110 318
- DE-A- 2 260 325
- DE-A- 2 452 173
- DE-A- 3 011 903
- FR-A- 1 600 001

## Beschreibung

Die Erfindung betrifft eine Schalt- oder Anzeigetafel gemäß dem Oberbegriff des Patentanspruches 1.

Bei einer derartigen Tafel ist es möglich, die einzelnen Baugruppen innerhalb des durch die Grundmodulform gegebenen Verlegemusters beliebig aneinander und übereinander zu reihen, um so die für den Einzelfall gewünschten Zurodnungen der Baugruppe zueinander zu erhalten, wobei sowohl verschiedene Zuordnungen zur Erzielung eines gewünschten Gesamtbildes als auch verschiedene Zuordnungen zur Ausfüllung eines gegebenen Platzes oder Raumes möglich sind. Beim Aufbau einer Tafel angebrachte Leerfelder können später durch ergänzende Baugruppen aufnehmende Felder oder solchen Baugruppen zugeordnete Felder beliebig ersetzt werden. Man kann die Tafel aus Modulelementen, die der Tafel zugeordnete Geräte, Recheneinheiten usw. aufnehmen, aus mit Fenstern oder Fensteröffnungen versehenen Modulelementen für die Aufnahme von Anzeigegeräten oder Bildschirmen und aus in der Sichtseite Betätigungsöffnungen oder Betätigungsmöglichkeiten für Schalt- und Einstelleinrichtungen aufweisenden Elementen je nach Bedarf aufbauen.

Eine Schalt- oder Anzeigetafel nach dem Oberbegriff des Patentanspruches 1 ist aus der FR-A-1 600 001 bekannt. Bei dieser bekannten Tafel bilden die einzelnen Modulelemente einseitig offene Hohlprismen, bei denen in den Seitenwänden Schwalbenschwanzführungen ausgeformt sind, in die entsprechende Doppelkeile eingeführt werden können, mit deren Hilfe die wenigstens in dem an die Schwalbenschwanzführungen anschließenden Bereich mit ihren Seitenwänden aneinanderliegenden Modulelemente gegeneinander verspannt werden sollen. Nachteilig ist hier, daß es ohne besondere Vorkehrungen kaum möglich ist, die Modulelemente mit ihren Sichtseiten in eine gemeinsame Ebene auszurichten. Würde man für die Montage eine Auflage der Elemente auf einer planen Ebene vorsehen und nur so läßt sich eine exakte Ausrichtung der Elemente untereinander erklären, dann ergeben sich beträchtliche Montageschwierigkeiten und es ist kaum möglich, eine exakte Ausrichtung mit den Nachbarelementen zu erzielen. Ein Vorteil der bekannten Tafel besteht darin, daß sie nur aus den Elementen aufgebaut werden kann und keine eigene Stütz- oder Tragkonstruktion, sondern allenfalls nur einen Außenrahmen benötigt. Sowohl bei dieser Tafel als auch bei anderen bekannten, ähnlichen Schalt- und Anzeigetafeln ist es schwierig, zu schützende Baueinheiten in den einzelnen Modulen gekapselt und dabei zumindest von der Rückseite her leicht zugänglich unterzubringen. Da solche Tafeln für elektrische Überwachungs- und Steuerungsanlagen Verwendung finden, sind zumindest für einen Großteil der einzelnen Modulelemente bzw. der in diesen Modulelementen untergebrachten Baueinheiten elektrische Zuleitungen und Anschlußverbindungen notwendig. Bei der bisherigen Bauweise werden diese Anschlußleitungen aus den Modulelementen herausgeführt und gesondert an der Rückseite der Tafel verlegt, wodurch sich die Verdrahtung als beträchtlicher zusätzlicher Arbeitsfaktor ergibt und auch die Schwierigkeit besteht, Änderungen der Anschlußverbindungen beim Austausch eines Bauteiles vorzunehmen.

Die zuletzt angeführten Unzukömmlichkeiten ergeben sich auch bei einer Schalt- oder Anzeigetafel nach der EP-A-0 385 966. Bei dieser Tafel werden ebenfalls Modulelemente verwendet, die einseitig offene Hohlprismen bilden, deren Frontseite geschlossen ist. Im Abstand von der Sichtseite sind bei quadratischen Sichtseiten an den Ecken des Quadrates nach hinten weisende kreissektorförmige Nasen vorgsehen, die mit Spaltabstand von zylindersektorförmigen Wandungsteilen umschlossen werden, welche die Seitenwände der Modulelemente verbinden und bis zur offenen Rückseite reichen. Beim Zusammensetzen der Modulelemente entstehen so an je vier stoßenden Ecken zylindrische Öffnungen, die bis zu einem Ringspalt um die einander zu einem Zylinder ergänzenden Nasen reichen. In diese Öffnungen werden rohrförmige Verbindungselemente ein- und mit den Enden auf die Nasen aufgeschoben. Die Verbindungselemente ragen an der Rückseite der Tafel aus den Öffnungen heraus und umgreifen mit hinterschnittenen Flanschen die hinteren Ränder der zylindersektorförmigen Wandungsteile, wobei die Enden der Verbindungselemente auf jeden Fall über die aus den Modulelementen gebildete Tafelrückseite vorragen. Nach einer bevorzugten Ausführung sind die erwähnten Hinterenden zusätzlich mit Schnapphalterungen ausgestattet, mit deren Hilfe sie an den Stehern eines Traggerüstes festgeschnappt werden können. Im Außenrandbereich der aus den Modulelementen zusammengesetzten Tafel ragen die Hälften der Verbindungselemente über die Tafelränder vor, die überstehenden Enden der Verbindungselemente und erst recht die vorzugsweise vorgesehenen Steher behindern die Anbringung notwendiger Leitungsverbindungen. Bauteile werden innerhalb der Modulelemente untergebracht und gegebenenfalls mit Tragplatten in Einschiebeführungen der Modulelemente eingeführt. Die Bautiefe der Tafel muß also an die die größte Einbautiefe aufweisenden Elemente angepaßt werden.

Aufgabe der Erfindung ist die Schaffung einer Schalt- oder Anzeigetafel der genannten Art, bei der die aufgezeigten Nachteile und Schwierigkeiten beseitigt sind, eine große Freizügigkeit hinsichtlich des Aufbaues und der Anordnung der Baugruppen auch bei An- und Umbauten möglich ist, mit einfachen Mitteln eine plane Sichtseite der Tafel erreicht wird und bei der über die Rückseite überstehende Halteelemente vermieden werden sowie im Bedarfsfall das Problem unterschiedlicher Leitungsführungen und der Veränderung von Leitungsführungen mit einfachen Mitteln gelöst werden kann.

Die gestellte Hauptaufgabe wird durch die Merkmale des Patentanspruches 1 gelöst. In den überstehenden Rändern der Sichtseiten können als Ausrichthilfen, zusammenwirkende Nuten und Federn angebracht werden. Im Gegensatz zu den bekannten Ausführungen ist an sich eine beliebige Formgebung für den zwischen den Flächenelementen und den Seitenwänden gebildeten Hohlraum möglich, die prinzipiell von der Umrißform der Sichtseite unabhängig wird. Die zwischen den Seitenwänden benachbarter Modulelemente gebildeten Spalte können sowohl die ganz in der Nähe der Sichtseite anzubringenden Verrastungselemente aufnehmen als auch zusätzliche Elemente, z. B. Verbindungsleitungen, aufnehmen.

Wenn auch, wie oben erwähnt wurde, Abweichungen in der Formgebung möglich sind, wird eine Grundform nach Unteranspruch 2 für die meisten Fälle bevorzugt.

Eine Ausgestaltung gemäß Anspruch 3 ermöglicht es, daß sich die einzelnen Modulelemente auch über die Einlegekörper aneinander abstützen, so daß diese Einlegekörper zur Gesamtfestigkeit der Tafel beitragen. Zufolge der Einlegenkörper kann im Bedarfsfall eine Demontage einzelner Modulelemente von der Tafelrückseite her vorgenommen werden. Vorteilhaft weisen die Gegenhalter eine Form nach Anspruch 4 auf. Durch eine Ausgestaltung gemäß Anspruch 5 wird die Stabilität der gebildeten Tafel verbessert und es wird eine fugenlose Aneinanderfügung der Modulelemente ermöglicht.

Durch die Weiterbildung gemäß Anspruch 6 wird eine sichere Verbindung der Elemente gewährleistet und erreicht, daß die Einschiebeführungen in einspringenden Verformungen der Seitenwände und dabei im Eckbereich des Grundmodulumrisses angebracht werden können, wo sie den Einbau der dem Modulelement zugeordneten Baugruppe praktisch nicht beeinträchtigen können. Die Modulelemente und die Einlegekörper werden in üblicher Weise aus Kunststofformteilen gebildet.

Bei einer Ausführung gemäß Anspruch 7 können gleiche Verbindungselemente sowohl zum Anschluß einfacher Modulelemente aneinander, zum Anschluß einfacher Modulelemente an größere Modulelemente als auch zur Verbindung solcher größerer Modulelemente untereinander Verwendung finden.

Durch eine Ausführung gemäß Anspruch 8 wird es möglich, die Baugruppen im Bedarfsfall in den gebildeten Gehäusen zu kapseln und sogar in dieser gekapselten Form in die Tafel zu integrieren, wobei trotzdem wegen der Teilbarkeit der Schalenkörper die Elemente der Baugruppe innerhalb dieses Gehäuses zugänglich bleiben und allfällige Wartungen bzw. Umstellungen oder Ergänzungen vorgenommen werden können. Das Gehäuse kann schon im Herstellbetrieb angebracht werden, so daß es eine Verpackung für die Baugruppe ergänzt. Für Baugruppen, mit verschiedenen quer zur Sichtseite zu messender Bauhöhe wird man trotzdem gleich hohe bzw. tiefe Schalenelemente als Grundkörper an der Sichtseite, aber verschieden hohe Ergänzungsschalenkörper verwenden. Diese Schalenkörper können zusätzlich zur Abstützung der Baugruppen auf einem hinter der Sichtseite anzubringenden Tragrahmen oder Traggestell Verwendung finden. Wegen der zwischen den Seitenwänden immer vorhandenen Spalte ist der Zugriff zu jeder einzelnen Ergänzungsschale gegeben und auch die Anbringung der Rasten und Gegenrasten zur Verbindung der Schalenelemente zum Gehäuse bedingt keine baulichen Schwierigkeiten.

Eine Weiterbildung gemäß Anspruch 9 ermöglicht in einfachster Weise die Herstellung von Leitungsverbindungen zwischen den Baugruppen. Dabei werden besonders kurze Leitungsverbindung durch die Weiterbildung gemäß Anspruch 10 ermöglicht.

Eine Ausführung nach Anspruch 11 ermöglicht es, die notwendige Verdrahtung in die gebildete Tafel zu integrieren und dabei die Leitungen vor allem geschützt und abgedeckt unterzubringen, so daß, nicht wie bei freiliegenden Verdrahtungen, auf eine besonders formschöne Führung der Leitungsverbindungen Bedacht genommen werden muß. Überdies sind die Leitungsverbindungen in den Kabelkanälen geschützt und gegen Berührungen und Herausfallen gesichert.

Weitere Einzelheiten und Vorteile des Erfindungsgegenstandes entnimmt man der nachfolgenden Zeichnungsbeschreibung.

In der Zeichnung ist der Erfindungsgegenstand beispielsweise veranschaulicht. Es zeigen
- Fig. 1: eine Schalttafel mit einer ein Steuergerät oder ein Anzeigefeld enthaltenden Baugruppe und zwei Tastenfeld-Baugruppen,
- Fig. 2: eine Schalttafel mit zwei Feldbaugruppen und vier Tastenfeld-Baugruppen,
- Fig. 3: zwei aneinandergefügte Einfach-Modulelemente von der Rückseite her gesehen, bei abgenommenen Gehäuseschalen,
- Fig. 4: ein Modulelement im Schnitt nach der Linie IV-IV der Fig. 3,
- Fig. 5: ein Verbindungselement in Seitenansicht,
- Fig. 6: einen Schnitt nach der Linie VI-VI der Fig. 5,

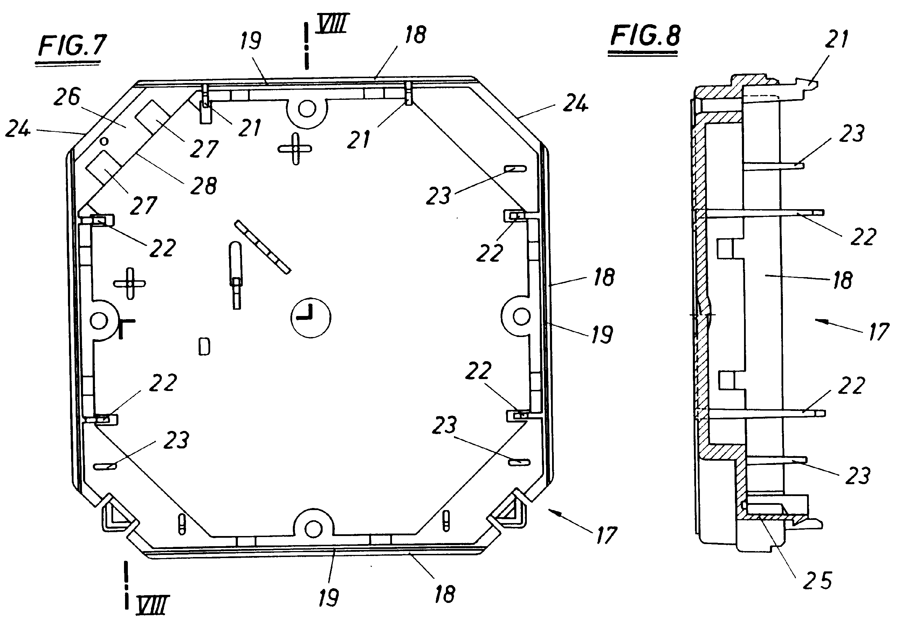

- Fig. 7: ein das Grundelement nach den Fig. 3 und 4 zu einem geschlossenen Gehäuse ergänzendes Schalenelement in Innenansicht und
- Fig. 8: einen Schnitt nach der Linie VIII-VIII der Fig. 7.

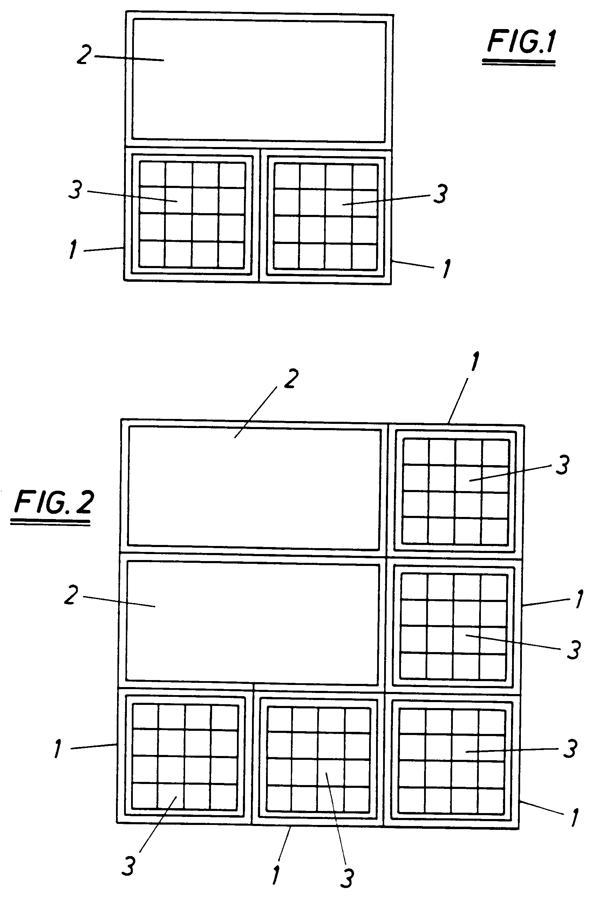

Nach Fig. 1 ist die Schalttafel aus drei Baugruppen aufgebaut, denen jeweils ein Modulelement 1 bzw. 2 zugeordnet ist. Die Modulelemente 1 besitzen Sichtseiten 3, die in diesem Fall von Tastenfeldern gebildet werden und haben an der Sichtseite eine quadratische Umrißform. Dagegen besitzt das Modulelement 2 eine rechteckige Umrißform, deren Größe zwei aneinandergefügten Modulelementen 1 entspricht. Nach Fig. 1 sind die beiden Modulelemente 1 unter dem Modulelement 2 angeordnet. Man könnte sie aber auch oberhalb des Modulelementes 2 anordnen bzw. ein Tastenfeld oben und ein Tastenfeld unten anbringen oder die Tastenfelder 3 neben der einen Schmalseite des Modulelementes 2 oder links und rechts des Modulelementes 2 anbringen. Die Tastenfelder 3 sind beim Ausführungsbeispiel mit je 16 Einzeltasten ausgestattet. Werden weniger Tasten benötigt, wird man eben nur ein Modulelement 1 mit Tastenfeld 3 verwenden und als zweites Modulelement 1 ein Leerelement vorsehen. Man kann auch einzelne Reihen oder Spalten der Tastenfelder 3 durch Leerfelder über die verbleibende Sichtseite der Elemente 1 ersetzen.

Fig. 2 zeigt eine andere Kombinationsmöglichkeit aus Modulelementen 1, 2. Man kann auch größere Modulelemente, z. B. Elemente, die die Größe von zwei Grundelementen 2 aufweisen, einsetzen. Durch Kombination größerer, aber jeweils eine Mehrfachwiederholung der kleineren Elemente 1 auf ihrer Sichtseite aufweisenden Elemente 2 oder größer mit Elementen 1 kann man eine größere Tafel mit geschlossenem Verlegemuster in der gewünschten Breite und Höhe aufbauen, wobei Einzelfelder oder ganze Tafelabschnitte durch Leerelemente gebildet sein können.

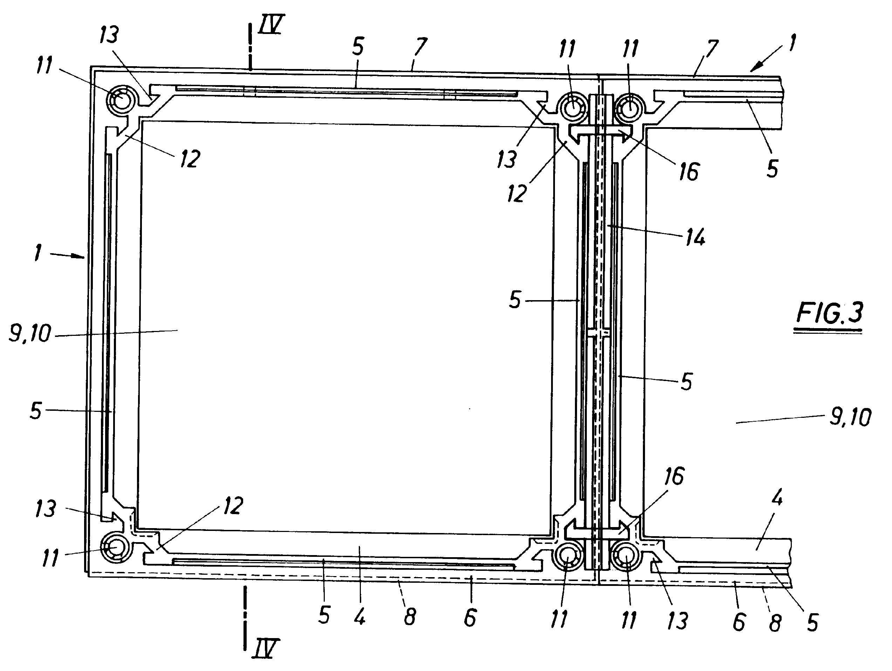

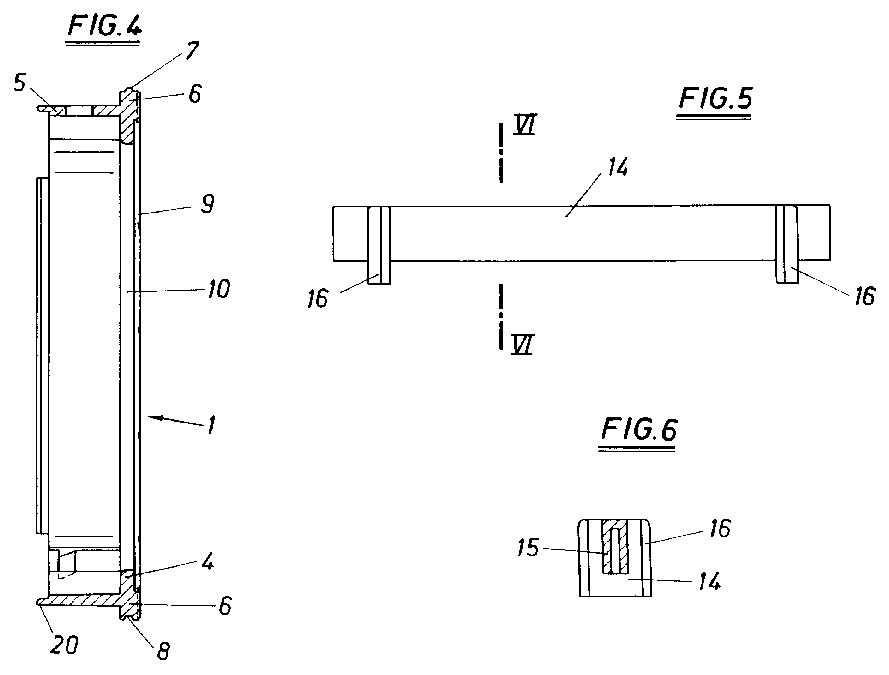

Aus den Fig. 3 und 4 ergibt sich, daß jedes einzelne Modulelement 1 an der Sichtseite einen Rahmen 4 bildet, von dem nach der von der Sichtseite abgewendeten Seite Wandungen 5 abstehen, die mit dem Sichtseitenrahmen 4 eine Halbschale bilden. Überstehende Randbereiche 6 des Rahmens sind an den Außenrändern mit Nut-Federprofilierungen 7, 8 versehen und können so mit den Rahmen anschließender Elemente 1 bzw. 2 praktisch fugenlos aneinandergefügt werden. Bei der im Ausführungsbeispiel angenommenen Ausführungsform für ein aus Einzeltasten aufgebautes Tastenfeld 3 ist die Rahmenöffnung durch eine durchsichtige elastisch verformbare Folie 9 abgedeckt und unter dieser Folie 9 liegt eine weitere Folie 10, die den Einzeltasten des Tastenfeldes 3 zugeordnet Bezeichnungen oder Kennzeichnungssymbole für die Funktion der einzelnen Tasten trägt. Die Tastenelemente selbst sind zumindest zum Großteil in der aus Sichtseite 4, 9 und Seitenwänden 5 bestehenden Schale untergebracht.

Die mit Abstand von den Außenrändern der überstehenden Rahmenteile 6 verlaufenden Wände 5 verlaufen über den Großteil der Seitenlänge parallel zu den Außenrändern 6. Im Eckbereich sind in ihnen runde Einsteckhülsen 11 für Verbindungselemente eingeformt und ferner sind die Ecken mit in die Wandungen 5 übergehenden Schrägteilen 12 abgeschrägt, welche Schrägteile 12 über die Höhe der Wände 5 reichende und nach der Außenseite offene, hinterschnittene hakenförmige Einschiebenuten 13 aufweisen. Werden zwei Elemente 1, wie in Fig.3, aneinandergefügt, so können Verbindungselemente 14 nach den Fig. 3, 5 und 6 in den zwischen den Wänden 5 der benachbarten Elemente 1 gebildeten Spalt eingeschoben werden, welche Verbindungselemente einen Einlegekörper 15 in Form eines U-förmigen Federelementes und von den Schenkeln dieses Federelementes abstehende hakenförmige Verrastungsvorsprünge 16 aufweisen und mit zur Rückwand der Sichtseite gerichteter Profilöffnung des U-Profiles einführbar sind, so daß sie die beiden Elemente in Fig. 3 kraft- und formschlüssig gegeneinander drücken. Die eingelegten Verbindungselemente 14 reichen bis zum oberen Randbereich der Wandungen 5. An den Elementen 2 wiederholt sich in der aus Fig. 3 ersichtlichen Grundteilung die Ecken- und Einlegenutenanordnung 13 in der Längsmitte des Elementes 2, so daß die Elemente 1 nebeneinander mit dem Element 2 verbunden werden können.

Anschließend an die Wände 5 kann eine zweite Halbschale 17 angebracht werden, welche das Modul-Grundelement 1 zu einem geschlossenen Gehäuse ergänzt. Eine entsprechende Schale wird auch für das Modulelement 2 vorgesehen. Die Schale 17 besitzt Seitenwände 18, die mit verdünnten Endbereichen 19 in abgesetzte Ränder 20 der Wände 5 eingreifen. Ferner sind parallel zu zwei gegenüberliegenden Wänden 18 vom Boden der Schale 17 hochstehende nach außen gerichtete Haken 21 vorgesehen, die beim Zusammenfügen der Schale in zugeordnete Öffnungen in den Wänden 5 einschnappen und damit die beiden Schalen 1, 17 aneinanderliegend verbinden. Weitere hochstehende Finger 22 und Stützansätze 23 dienen zur Abstützung und verrasteten Halterung einer Tragplatte der Einzeltasten des Tastenfeldes und gegebenenfalls einer zusätzlichen im Gehäuseteil 17 unterzubringenden und zusätzliche Schaltverbindungen aufnehmenden Platine (in der Zeichnung nicht dargestellt).

Die Ecken 24 der Schale 17 sind etwa der Innenkontur der Ecken 12 folgend abgeschrägt, so daß die Einschiebeführungen 13 zugänglich bleiben und der Einlegekörper 14 auch neben angebrachten Gehäuseschalen 17 eingelegt und herausgenommen werden kann. An die abgeschrägten Ecken 24 schließen an drei Seiten bis zur halben Höhe der Schalen 17 hochgezogene Wandungsteile 25 an. An der vierten Seite ist eine Abdeckplatte 26 vorgesehen, von der die Seitenwand bereits mit geringem Abstand von der Schalenöffnung hochsteigt. An dieser Seite können aus dem Gehäuse 17 durch Öffnungen 27 Steckerbuchsen herausgeführt werden, wobei die Öffnung der Steckerbuchsen vorzugsweise an einem Wandelement 28 liegt.

Bei montierten Geräten können Leitungsverbindungen zwischen den Elementen 1 und 2 durch in diese Steckerbuchsen 27 eingeführte Gegenstecker und anschließende Kabel erfolgen, welche Kabel in den zwischen den Wänden 18 gebildeten Spalten verlegt werden, welche Spalte durch zumindest über die Länge der Seiten 18 reichende rinnenförmige Abdeckelemente, die mit Seitenpratzen in Verrastungsöffnungen der Wandungen 18 eingreifen, zu Kabelkanälen abgedeckt werden können.

## Patentansprüche

1. Schalt- oder Anzeigetafel für elektrische Überwachungs- und Steuerungsanlagen, mit zwei oder mehreren über die Tafel verteilten Baugruppen, die in bzw. an die Tafel bildenden Modulelementen (1, 2) untergebracht sind, wobei die Modulelemente Grundkörper (4, 5) mit je einem eine Sichtseite bildenden Flächenelement (4, 9, 10) und rückseitig von diesem abstehenden Seitenwänden (5) besitzen, die die Sichtseiten bildenden Flächenelemente (4, 9, 10) untereinander die gleiche, regelmäßige Umrißform oder Mehrfachwiederholungen dieser Umrißform aufweisen, so daß sie sich gegebenenfalls unter Verwendung von leeren Modulelementen oder Füllelementen mit ihren Sichtseiten aneinander anstoßend zu einem geschlossenen, die Sichtseiten der Tafel bildenden Verlegemuster ergänzen, und die Seitenwände (5) der Modulelemente (1, 2) mit Abstand von der Sichtseite mit hinterschnittenen Verrastungsvertiefungen (13) oder gegengleichen Verrastungsvorsprüngen versehen sind, in die die Modulelemente (1, 2) mittels Steckverbindung zur Tafel verbindenden Verbindungselemente von der Tafelrückseite her einsetzbar sind, dadurch gekennzeichnet, daß die Randbereiche (6) der die Sichtseite bildenden Flächenelemente (4, 9, 10) jedes Modulelementes (1, 2) im gesamten Umfangsbereich nach außen über die Seitenwände (5) überstehend ausgebildet und mit zusammenwirkenden Nut-Federprofilierungen (7, 8) versehen sind, und daß die Verbindungselemente (14) für die Steckverbindungen in den Zwischenräumen der Seitenwände (5) an der Rückseite der überstehenden Randbereiche (6) der die Sichtseiten bildenden Flächenelemente (4, 9, 10) vorgesehen sind und mit ihren Gegenrasten (16) in die Verrastungsvertiefungen oder-vorsprünge (13) der Seitenwände (5) eingreifen.

2. Tafel nach Anspruch 1, dadurch gekennzeichnet, daß die Seitenwände (5) mit Parallelabstand von den Außenrändern der die Sichtseite bildenden Flächenelemente (4, 9, 10) vorgesehen sind.

3. Tafel nach den Ansprüchen 1 und 2, dadurch gekennzeichnet, daß die Verbindungselemente (14) aus an die Seitenlänge der Modulelemente (1) angepaßten Einlegekörpem für die Spalte zwischen den Seitenwänden (5) benachbarter Modulelemente (1, 2) bestehen, welche Einlegekörper (14) quer zu ihrer Längsrichtung in den jeweiligen Spalt einschiebbar sind und dabei mit ihren die Gegenrasten bildenden Gegenhaltern (16) in gegen den Spalt zu hinterschnittene, die Verrastungsvertiefungen bildende Einschiebeführungen (13) der Seitenwände eingreifen.

4. Tafel nach einem der Ansprüche 1 bis 3, dadurch gekennzeichnet, daß die Gegenhalter (16) eine hakenartige Querschnittsform aufweisen.

5. Tafel nach einem der Ansprüche 1 bis 4, dadurch gekennzeichnet, daß die die Verbindungselemente bildenden Einlegekörper aus im Querschnitt im wesentlichen U-förmigen Federelementen (15) bestehen, die mit der zwischen den zusammenfedernden, die Gegenrasten (16) tragenden Längsfianschen des Profiles gebildeten Profilöffnung voran quer zur Längsrichtung des Einlegekörpers in den Spalt einschiebbar sind.

6. Tafel nach einem der Ansprüche 1 bis 5, dadurch gekennzeichnet, daß die hakenartigen Gegenhalter (16) im Endbereich der Einlegekörper (14) vorgesehen und ihre Hakenschenkel sich verjüngend von den Enden der Einlegekörper abweisen.

7. Tafel nach einem der Ansprüche 1 bis 6, dadurch gekennzeichnet, daß die Verbindungselemente (14) in der Seitenlänge eines einfachen Modulelementes (1) entsprechenden Längen vorgesehen sind, so daß an die entsprechenden Seiten von eine Mehrfachwiederholung der Umrißform eines einfachen Modulelementes (1) aufweisenden Modulelementen (2) eine entsprechende Anzahl von Einzelelementen (1) anschließbar ist.

8. Tafel nach einem der Ansprüche 1 bis 7, bei der der aus die Sichtseite bildendem Flächenelement (4, 9, 10) und Seitenwänden (5) bestehende Grundkörper des Modulelementes (1) eine zur Rückseite der Tafel offene Schale bildet, dadurch gekennzeichnet, daß an diesen die offene Schale bildenden Grundkörper (1, 2) ein zu ihm offener Schalenkörper (17) ansetzbar ist, der ihn zu einem Gehäuse für die zugeordnete Baugruppe ergänzt, daß der Schalenkörper (17) eine in der Aufsetzstellung für den Grundkörper die Einschiebeführungen (13) für die Gegenrasten (16) der Einlegekörper (14) freilassende Umrißform aufweist und die beiden Schalenkörper (1, 2, 17) über an- und eingeformte Rasten (21) und Gegenrasten in ihren Randbereichen verbindbar sind.

9. Tafel nach einem der Ansprüche 1 bis 8, dadurch gekennzeichnet, daß für die Herstellung elektrischer Leitungsverbindungen zwischen den Baugruppen in den Seitenwänden des den Grundkörper (1) zu einem Gehäuse ergänzenden Schalenkörper (17) wenigstens eine Steckeröffnung (27, 28) vorgesehen ist.

10. Tafel nach Anspruch 9, dadurch gekennzeichnet, daß die Steckeröffnung (27, 28) in über den Ecken des Grundkörpers (1) abgeschrägten Wandteilen (28) des den Grundkörper (1) zum Gehäuse ergänzenden Schalenkörpers (17) angebracht ist.

11. Tafel nach Anspruch 9 oder 10, dadurch gekennzeichnet, daß Leitungskabel mit Gegensteckern für die Steckeranschlüsse (27) in den Spalten zwischen den Gehäusen (1, 2, 17) verlegt sind, wobei die Spalte zu Kabelkanälen schließende Abdeckelemente vorgesehen und über angeformte Rasten und Gegenrasten an den Schalenwänden befestigbar sind.

## Claims

1. A switchboard or display board for electric monitoring and control systems, comprising two or more sub-assemblies distributed over the board and disposed in or on modular elements (1, 2) constituting the board, the modular elements comprising base members (4, 5) each with a surface element (4, 9, 10) forming a visible side and side walls (5) projecting backwards from the surface element, the surface elements (4, 9, 10) forming the visible sides have the same regular contour as one another, or multiple repetitions of this contour, so that their visible sides can abut one another, optionally with use of empty modular elements or filling elements, to form a continuous installation pattern constituting the visible sides of the boards, and the side walls (5) of the modular elements (1, 2), at a distance from the visible side, are formed with undercut locking recesses (13) or diametrically opposite locking projections for inserting connecting elements from the rear of the board so as to connect the modular elements (1, 2) by plug-in connections to the board, characterised in that the edge regions (6) of the surface elements (4, 9, 10) of each modular element (1, 2) forming the visible side are shaped so as to project outwards over the side walls (5) in the entire peripheral region and are provided with cooperating tongue and groove profiling (7, 8), and the connecting elements (14) for the plug-in connections are provided in the intermediate spaces in the side walls (5) at the back of the projecting edge regions (6) of the surface elements (4, 9, 10) forming the visible sides, and the companion catches (16) of the connecting elements (14) engage in the locking recesses or projections (13) in the side walls (5).

2. A board according to claim 1, characterised in that the side walls (5) are disposed parallel to and at a distance from the outer edges of the surface elements (4, 9, 10) forming the visible side.

3. A board according to claims 1 and 2, characterised in that the connecting elements (14) comprise insertion members matching the side length of the modular elements (1) and adapted for the gaps between the side walls (5) of neighbouring modular elements (1, 2), the insertion members (14) being insertable transversely to their longitudinal direction into the respective gap, when their counter-holders (16) forming the companion catches engage in insertion guides (13) in the side walls, the guides (13) forming the locking recesses and being undercut towards the gap.

4. A board according to any of claims 1 to 3, characterised in that the counter-holders (16) have a hooked cross-sectional shape.

5. A board according to any of claims 1 to 4, characterised in that the insertion members forming the connecting elements comprise substantially U-section spring elements (15) having a sectional opening which is formed between the longitudinal flanges of the section member which bear the companion catches (16) and which spring together, the sectional opening being adapted for pushing forwards into the gap, transversely to the longitudinal direction of the insertion member.

6. A board according to any of claims 1 to 5, characterised in that the hooked counter-holders (16) are provided in the end region of the insertion members (14) and their hooked arms taper away from the ends of the insertion members.

7. A board according to any of claims 1 to 6, characterised in that the connecting elements (14) are given a length corresponding to the side length of a single modular element (1), so that a corresponding number of individual elements (1) can be connected to the corresponding sides of modular elements (2) which have a multiple repeat of the contour of a single modular element (1).

8. A board according to any of claims 1 to 7, in which the base member of the modular element (1), the aforementioned base member being made up of the side walls (5) and the surface element (4, 9, 10) constituting the visible side, forms a shell open towards the rear of the board, characterised in that a shell member (17) open towards the base member (1, 2), which forms the open shell, can be attached thereto and co-operates therewith to form a casing for the associated sub-assembly, and the shell member (17) has a contour which exposes the insertion sides (13) for the companion catches (16) of the insertion members (14), in the position for fitting the base member, and the edge regions of the two shell members (1, 2, 17) are adapted to be connected via integrally moulded catches (21) and companion catches.

9. A board according to any of claims 1 to 8, characterised in that at least one plug opening (27, 28) is provided for making electric cable connections between the sub-assemblies in the side walls of the shell member (17) which co-operates with the base member (1) to form a casing.

10. A board according to claim 9, characterised in that the plug opening (27, 28) is disposed in the wall parts (28) of the shell member (17) which co-operates with the base member (1) to form a casing, the wall parts being bevelled across the corners of the base member (1).

11. A board according to claim 9 or 10, characterised in that leads with companion plugs for the plug connections (27) are laid in the gaps between the casings (1, 2, 17), and cover elements are provided for closing the gaps to form cable ducts and are adapted to be secured to the shell walls by integrally-moulded catches and companion catches.

## Revendications

1. Panneau électrique ou d'affichage, pour des installations de surveillance et de commande, comportant deux groupes de construction ou plus, répartis sur le tableau, logés dans, respectivement sur, des éléments modulaires (1, 2) constituant le tableau, les éléments modulaires comportant un corps de base (4, 5) ayant chacun un élément de surface (4, 9, 10) constituant une face visible et des parois latérales (5), en faisant saillie en direction de l'arrière, les éléments de surface (4, 9, 10) constituant les faces visibles ayant les uns les autres la même forme de contour, régulière, ou bien présentant des répétitions multiples de cette forme de contour, de sorte que, le cas échéant en utilisant des éléments modulaires vides, ou des éléments de remplissage, ayant leurs faces visibles se touchant les unes les autres, on puisse compléter le modèle d'installation, pour donner un modèle fermé, constitué par les faces visibles du tableau, les parois latérales (5) des éléments modulaires (1, 2) étant pourvues, à distance de la face visible, de cavités d'encliquetage (13) dotées d'une contre-dépouille, ou bien de saillies d'encliquetage, identiques et conjuguées, dans lesquelles des éléments de liaison, reliant au tableau les éléments modulaires (1, 2) par liaison par enfichage, peuvent être insérés par la face arrière du tableau,
caractérisé en ce que les zones marginales (6) des éléments de surface (4, 9, 10), constituant la face visible, de chaque élément modulaire (1, 2), sont réalisées en dépassant sur l'ensemble de la zone des périphériques vers l'extérieur au-dessus des parois latérales (5) et pourvues de profilages à rainure et clavette (7, 8) destinés à coopérer, et en ce que les éléments de liaison pourvus pour les liaisons à enfichage sont prévus dans les espaces intermédiaires dans les parois latérales (5), en face arrière des zones marginales (6) en dépassement des éléments de surface (4, 9, 10) constituant les faces visibles et s'engagent par leurs cliquets conjugués (16) dans les cavités ou saillies d'encliquetage (13) des parois latérales (5).

2. Tableau selon la revendication 1,
caractérisé en ce que les parois latérales (5) sont prévues selon un espacement parallèle vis-à-vis des bords extérieurs des éléments de surface (4, 9, 10) constituant la face visible.

3. Tableau selon les revendications 1 et 2,
caractérisé en ce que les éléments de liaison (14) sont composés de corps à insérer, adaptés aux longueurs de cotés des éléments annulaires (1), prévus pour les interstices, créés entre les parois latérales (5), d'éléments modulaires (1, 2) voisins, ces corps insérés (14) pouvant être enfilés transversalement par rapport à leurs direction longitudinale dans l'interstice respectif et s'engager alors, par leur contre-support (16) constituant les contres-cliquets, dans des guidages à coulissement (13) des parois latérales, dotés de contre-dépouilles,orientées à l'encontre de l'interstice et constituant les cavités d'encliquetage.

4. Tableau selon l'une des revendications 1 à 3,
caractérisé en ce que les contres supports (16) présentent une section transversale en forme de crochet.

5. Tableau selon l'une des revendications 1 à 4,
caractérisé en ce que les corps à insérer constituant les éléments de liaison sont composés d'éléments élastiques (15) à section transversale sensiblement en U, pouvant être insérés transversalement par rapport à la direction longitudinale du corps à insérer, dans l'interstice, en passant par l'ouverture de profilé constituée entre les rebords longitudinaux, portant les contre cliquets (16), du profil et se déformant conjointement élastiquement.

6. Tableau selon l'une des revendications 1 à 5,
caractérisé en ce que les contre-supports (15) en crochets sont prévus dans la zone d'extrémité des corps à insérer (14) et leurs branches de crochets vont en s'effilant au fur et à mesure qu'elles s'éloignent des extrémités des corps à insérer.

7. Tableau selon l'une des revendications 1 à 6,
caractérisé en ce que les éléments de liaison (14) sont prévus avec des longueurs correspondant à la longueur du coté d'un élément modulaire (1) simple, de sorte que, sur les cotés correspondants d'une répétition multiple des éléments modulaires (2) présentant la forme de contour d'un élément modulaire (1) simple, on puisse raccorder un nombre correspondant d'éléments individuels (1).

8. Tableau selon l'une des revendications 1 à 7,
dans lequel le corps de base, composé de l'élément de surface (4, 9, 10) constituant la face visible et des parois latérales (5) de l'élément modulaire (1) constitue une coque ouverte en direction de la face arrière du tableau, caractérisé en ce que sur ce corps de base 1, 2) constituant la coque ouverte, un corps de coque (17), ouvert en direction de lui, peut être appliqué et le compléter, pour constituer un carter pour le groupe de construction associé, en ce que le corps de coque (17) présente une forme de contour laissant libre, dans la position de mise en place du corps de base, les guidages coulissants (13) destinés au contre-cliquet (16) des corps à insérer (14), et les deux corps de coque (1, 2, 17) pouvant être reliés dans leurs zones marginales, par l'intermédiaire de cliquets (21) et de contre-cliquets, mâles formés d'un seul tenant ou bien femelles.

9. Tableau selon l'une des revendications 1 à 8,
caractérisé en ce qu'au moins une ouverture de prise (27, 28) est prévue pour établir des liaisons de lignes électriques entre les groupes de construction se trouvant dans les parois latérales du corps de coque (17) complétant le corps de base (1) pour constituer un carter.

10. Tableau selon la revendication 9,
caractérisé en ce que l'ouverture pour prise (27, 28) est ménagée dans des parties de paroi (28), chanfreinées aux angles du corps de base (1), du corps de coque (17) complétant le corps de base (1) pour constituer un carter.

11. Tableau selon la revendication 9 ou 10,
caractérisé en ce que des câbles électriques, avec des prises électriques conjuguées destinées aux raccordements de prise (27), sont posés dans les interstices entre les carters (1, 2, 17), des éléments de recouvrement, fermant les interstices pour constituer des canaux à câbles, étant prévus et pouvant être fixés sur les parois de coque, par l'intermédiaire de cliquets mâles formant d'un seul tenant et de cliquets conjugués.
